# EUROPEAN PATENT SPECIFICATION

(11) **EP 3 413 389 B1**
(45) Date of publication and mention of the grant of the patent: **30.10.2019**
(21) Application number: 17879983.9
(22) Date of filing: 14.12.2017
(51) Int. Cl.: H01M 10/058, H01M 10/0525, H01M 10/42, H01M 2/18, H01M 4/78, H01M 10/052, H01M 4/66, H01M 4/75, H01M 10/0565, H01M 10/0587

(54) **CABLE-TYPE SECONDARY BATTERY**
KABELSEKUNDÄRBATTERIE
BATTERIE SECONDAIRE DE TYPE CÂBLE

(30) Priority: 14.12.2016 KR 20160170637
(43) Date of publication of application: 12.12.2018
(73) Proprietor: LG Chem, Ltd., Seoul 07336 (KR)
(72) Inventor: UHM, In-Sung, Daejeon 34122 (KR); KANG, Sung-Joong, Daejeon 34122 (KR); LEE, Jae-Hyun, Daejeon 34122 (KR)
(74) Representative: Hoffmann Eitle
(86) International application number: PCT/KR2017/014773
(87) International publication number: WO 2018/111016

(56) References cited:
- KR-A- 20140 054 131
- KR-A- 20140 054 131
- KR-B1- 100 742 739
- KR-B1- 100 742 739
- KR-B1- 101 465 169
- KR-B1- 101 465 169
- KR-B1- 101 530 678
- KR-B1- 101 530 678
- US-A1- 2016 020 483
- US-A1- 2016 020 483

## Description

### TECHNICAL FIELD

The present disclosure relates to a cable type secondary battery. More particularly, the present disclosure relates to a cable type secondary battery having a novel electrode structure.

### BACKGROUND ART

A lithium secondary battery has many advantages, such as high energy density, high operating voltage and excellent storage and life characteristics, and thus has been used widely in various electronic instruments, such as personal computers, camcorders, cellular phones, portable CD players and personal digital assistants (PDA).

In general, a lithium secondary battery includes a cylindrical or prismatic casing, and an electrode assembly received in the casing together with an electrolyte. Herein, the electrode assembly includes positive electrodes, separators and negative electrodes, stacked successively, and it generally has a wound structure of a jelly-roll type or a stacked structure.

In addition, more recently, a cable type secondary battery which is freely deformable and can be applied to various industrial fields has been developed. The cable type secondary battery has a significantly large ratio of length to diameter, and generally includes an inner electrode, a separator formed to surround the inner electrode and an outer electrode formed to surround the separator.

However, due to the nature in shape of such a conventional cable type secondary battery, there has been a problem of spacing in the inner electrode or the outer electrode.

Meanwhile, when a signal wire having a function of transmitting signals is fused to such a cable type secondary battery, it is possible to realize a cable capable of carrying out electric power supply integrally with transmission/reception of signals. Japanese Patent Laid-Open No. 2001-110244 discloses related technology.

Japanese Patent Laid-Open No. 2001-110244 discloses a battery cable having an integrated structure in which a flexible and elongated secondary battery body is received in a casing and a signal cable is installed in the casing with the secondary battery body adjacent thereto.

However, the above-mentioned cable structure requires a complicated assemblage process and is not amenable to mass production, since it is difficult to integrate the cable type secondary battery with the signal cable in the casing. Thus, measures are required to overcome this. In addition, there is a disadvantage in that the cable has an increased overall outer diameter due to the structure in which the signal cable is disposed at the outside of the cable type secondary battery with a predetermined interval.

### DISCLOSURE

### Technical Problem

The present disclosure is designed to solve the problems of the related art, and therefore the present disclosure is directed to providing a cable type secondary battery having a novel structure which can fundamentally prevent spacing of an electrode, which, otherwise, may occur in a cable type secondary battery including an inner electrode and an outer electrode.

The present disclosure is also directed to providing a cable type secondary battery having a structure capable of preventing an increase in outer diameter of the cable type secondary battery by disposing a signal cable in a cable-type core portion formed in the cable-type secondary battery.

### Technical Solution

In one aspect of the present disclosure, there is provided a cable type secondary battery, including: a cable-type core portion; a positive electrode wire wound helically to surround the outer surface of the cable-type core portion with a predetermined spacing, and including a first porous coating layer formed on the outer surface thereof; and a negative electrode wire wound helically to surround the outer surface of the cable-type core portion alternately with the wound positive electrode wire to correspond to the predetermined interval, and including a second porous coating layer formed on the outer surface thereof.

Herein, the cable-type core portion may include a signal cable.

Herein, the signal cable may have a tubular structure, spring-like structure, cylindrical structural or a prismatic structure.

In addition, the signal cable may be any one selected from the group consisting of a sound signal cable, light signal cable, electric signal cable and a video signal cable, or two or more of them.

In addition, the signal cable may be an optical fiber cable coated with polyolefin, thermoplastic polyurethane, thermoplastic elastomer or polyacrylate; or a metallic cable of copper, aluminum or nickel.

Further, the signal cable may further include an electromagnetic field interruption-preventing layer surrounding the outer surface thereof.

Meanwhile, each of the first porous coating layer and the second porous coating layer may be independently an electrolyte layer or a separator.

In addition, the cable type secondary battery may be coated with a protective coating on the outer surface thereof.

In addition, the cable type secondary battery may be flexible.

Further, the cable type secondary battery may be a lithium secondary battery.

### Advantageous Effects

According to the present disclosure, it is possible to ensure the durability of a cable type secondary battery against bending by fundamentally preventing spacing of an electrode which may occur in the inner electrode or outer electrode of a conventional cable type secondary battery.

In addition, it is possible to avoid a need for a separate space for installing a signal wire unit by disposing a signal cable in the cable-type core portion formed in a cable type secondary battery. It is also possible to prevent an increase in overall outer diameter of a cable type secondary battery.

Further, since a signal cable, such as an optical fiber cable or metallic cable, is disposed at the center of a cable type secondary battery, it is possible to protect the signal cable from signal interruption or moisture effectively.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view illustrating the main constitution of a conventional cable type secondary battery.
FIG. 2 is a schematic view illustrating the positive electrode wire and the negative electrode wire forming the cable type secondary battery according to an embodiment of the present disclosure.
FIG. 3 and FIG. 4 are schematic views each illustrating the main constitution of the cable type secondary battery according to an embodiment of the present disclosure.
FIG. 5 is a schematic view illustrating the cable-type core portion according to an embodiment of the present disclosure.
FIG. 6 is a schematic view illustrating the shape of the cable type secondary battery according to an embodiment of the present disclosure after it is bent.

### [Description of Main Elements]

1: Inner electrode 2: Separator
3: Outer electrode 10: Cable-type core portion
11: Signal cable
12: Insulating electromagnetic field interruption-preventing layer
13: Conductive electromagnetic field interruption-preventing layer
20: Positive electrode wire 21: Positive electrode conductive wire
22: Positive electrode active material 23: First porous coating layer
30: Negative electrode wire 31: Negative electrode conductive wire
32: Negative electrode active material 33: Second porous coating layer
40: Protective coating 100: Cable type secondary battery

### BEST MODE

Hereinafter, the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

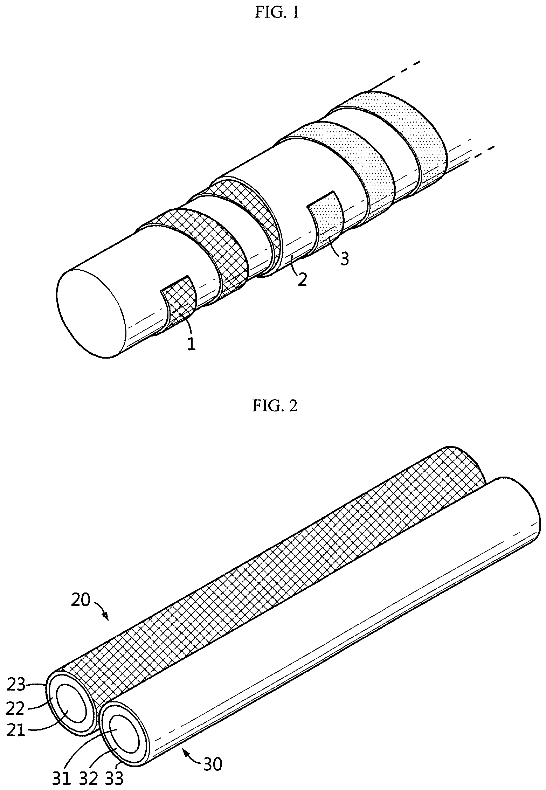

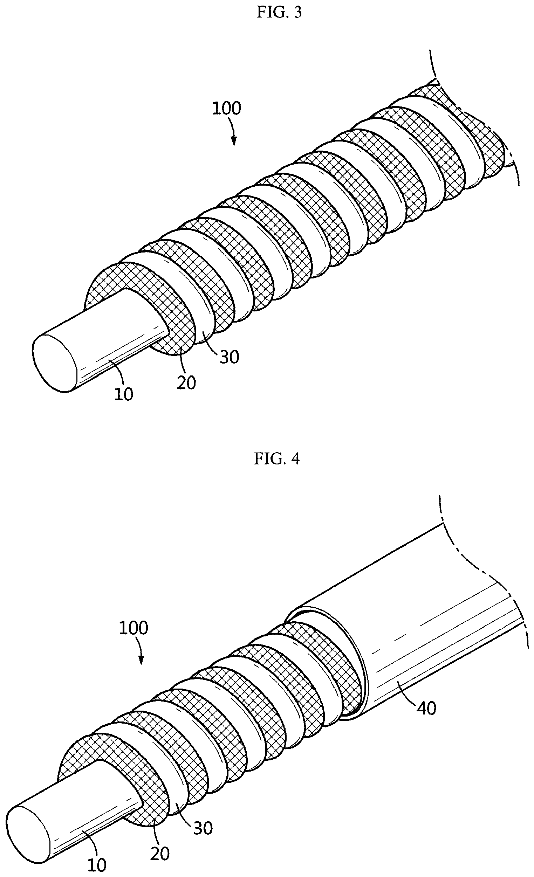

FIG. 1 is a schematic perspective view illustrating the main constitution of a conventional cable type secondary battery, FIG.2 is a schematic view illustrating the positive electrode wire and the negative electrode wire forming the cable type secondary battery according to an embodiment, and FIG. 3 and FIG. 4 are schematic views each illustrating the main constitution of the cable type secondary battery 100 according to an embodiment of the present disclosure.

Referring to FIG. 1, the conventional cable type secondary battery includes a helically wound sheet type inner electrode 1, a separator 2 formed to surround the inner electrode 1, and an outer electrode 3 wound helically on the outer surface of the separator 2, successively, when viewed from the inner part thereof.

However, due to the characteristic shape of the conventional cable type secondary battery, the wound sheet type inner electrode 1 or wound sheet type outer electrode 3 may cause spacing on the winding surface thereof to generate defects in any one electrode. Particularly, when the battery is bent repeatedly under the application of external force, the inner electrode 1 and the outer electrode 3 have a different bending radius and show a different extent of elongation/shrinking. Thus, while the electrodes are spaced apart from each other to release the stress, friction occurs to cause damage of the separator or the separation of the electrode active material, thereby causing a short-circuit between the electrodes at the spaced part.

In addition, in the case of the conventional battery including a second electrode structure which helically surrounds the outside of a linear or helical first electrode structure, the portion, where the second electrode structure helically surrounds the first electrode structures and is in contact with the first electrode structure, causes degradation of flexibility, unlike the present disclosure. In addition, when the battery is bent repeatedly, the portion causes damage of the separator or damage of the electrode structure resulting from separation of the electrode active material, due to the friction at the portion.

Meanwhile, referring to FIG. 2-FIG. 4, the cable type secondary battery 100 according to an embodiment of the present disclosure includes: a cable-type core portion 10; a positive electrode wire 20 wound helically to surround the outer surface of the cable-type core portion 10 with a predetermined spacing, and including a first porous coating layer 23 formed on the outer surface thereof; and a negative electrode wire 30 wound helically to surround the outer surface of the cable-type core portion 10 alternately with the wound positive electrode wire 20 to correspond to the predetermined interval, and including a second porous coating layer 33 formed on the outer surface thereof.

In other words, the positive electrode wire 20 and the negative electrode wire 30 are formed alternately on the same imaginary cylindrical shape of prismatic shape, and thus have a novel electrode arrangement structure beyond the concept of an inner electrode and an outer electrode. Therefore, it is possible to fundamentally prevent a probability of spacing on the electrode winding surface, which, otherwise, may occur according to the related art. As a result, it is possible to ensure the durability of a cable type secondary battery against bending.

In addition, since the surfaces (winding surfaces) on which the positive electrode wire 20 and the negative electrode wire 30 are wound are disposed on the same circumferential surface, the electrodes move within the same bending radius upon bending of the battery, and thus no stimulation occurs in the vertical direction. Further, in the cable type secondary battery 100 according to the present disclosure, the positive electrode wire 20 and the negative electrode wire 30 are in contact with each other, thereby improving flexibility significantly. Thus, even when the battery is subjected to bending repeatedly, there is no problem of damages of the porous coating layers caused by the friction of the first porous coating layer with the second porous coating layer, and it is possible to prevent a short-circuit between the electrodes, which, otherwise, occurs in the above-mentioned conventional battery structure.

Herein, the positive electrode wire 20 is a conductive wire 21 coated with a positive electrode active material 22, is wound helically on the outer surface of the cable-type core portion 10 and is extended along the longitudinal direction of the cable type secondary battery 100. The conductive wire 21 functioning as a current collector may include a material, such as stainless steel, nickel, copper or silver. The positive electrode active material 22 coated on the surface of the conductive wire 21 may include a positive electrode active material for a conventional lithium secondary battery.

In addition, the negative electrode wire 30 is a conductive wire 31 coated with a negative electrode active material 32, is wound helically on the outer surface of the cable-type core portion 10 and is extended along the longitudinal direction of the cable type secondary battery 100 alternately with the positive electrode wire 20. The conductive wire 31 functioning as a current collector may include the same material used for the positive electrode wire 20. The negative electrode active material 32 coated on the surface of the conductive wire 31 may include a negative electrode active material for a conventional lithium secondary battery.

Meanwhile, the cable-type core portion 10 allows the cable type secondary battery 100 to retain its linear shape, can prevent deformation of the battery structure caused by external force, and prevents collapse or deformation of the battery structure to ensure the flexibility of the cable type secondary battery 100.

In addition, the first porous coating layer 23 and the second porous coating layer 33 serve to interrupt direct contact between the positive electrode wire 20 and the negative electrode wire 30, and require no additional separator.

Referring to FIG. 4, according to an embodiment of the present disclosure, the cable type secondary battery 100 is provided with a protective coating 40, which is an insulator and is formed to surround the outermost surface of the cable type secondary battery to protect the electrodes from moisture in the air and external impact.

The protective coating 40 may include a conventional polymer resin including a moisture-interrupting layer. Herein, the moisture-interrupting layer may include aluminum or a liquid crystal polymer having excellent moisture-interrupting property, and such a polymer may include PET, PVC, HDPE or epoxy resin.

Meanwhile, the cable-type core portion 10 may include a signal cable.

The signal cable is inserted into the cable type secondary battery 100 and is extended along the longitudinal direction of the cable type secondary battery 100. The signal cable transmits predetermined sound signals, light signals, electric signals or video signals generated in a system to which the cable type secondary battery 100 is connected, in the cable type secondary battery 100.

Herein, the signal cable may have a tubular structure, spring-like structure, cylindrical structure or a prismatic structure, such as a triangular, quadrangular, pentagonal or hexagonal structure.

In addition, the signal cable may be an optical fiber cable insulated and protectively coated with a material, such as polyolefin, thermoplastic polyurethane, thermoplastic elastomer or polyacrylate; or a metallic cable including copper, aluminum or nickel. Such signal cables may be present in various shapes, such as a shape including a plurality of twisted signal cables.

Particularly, when the signal cable is a sound signal cable, it may include a twisted pair cable (TPC) preferably, and the specification of TPC is defined as a content of oxygen introduced upon smelting of copper of 300 ppm and a purity of about 99.9%.

In addition, when the signal cable is A/V signal cable, linear crystal oxygen free copper (LCOFC) including oxygen free copper (OFC) particles arranged linearly may be used, and the OFC means 'copper free from oxygen' literally, has an oxygen content of 10 ppm or less and generally shows a purity of 99.999% or higher.

The signal cable may be a composite cable including a video cable, ground cable, mic cable, right cable, left cable, or the like, and may have a twisted shape or a linear single cable shape. When transmitting sound signals alone, the signal cable may have a twisted cable or linear single cable shape including a right cable and a left cable, and the end thereof may be formed into a shape of a conventional earphone cord.

The signal cable serves as a winding core and functions to transmit signals in the cable type secondary battery 100. The signal cable requires no additional space in which the signal cable unit is installed, and prevents an increase in overall outer diameter of the cable type secondary battery 100. In addition, the signal cable, such as an optical fiber cable or metallic cable, is disposed at the center of the cable type secondary battery 100. Thus, it is possible to protect the signal cable effectively from signal interruption or moisture.

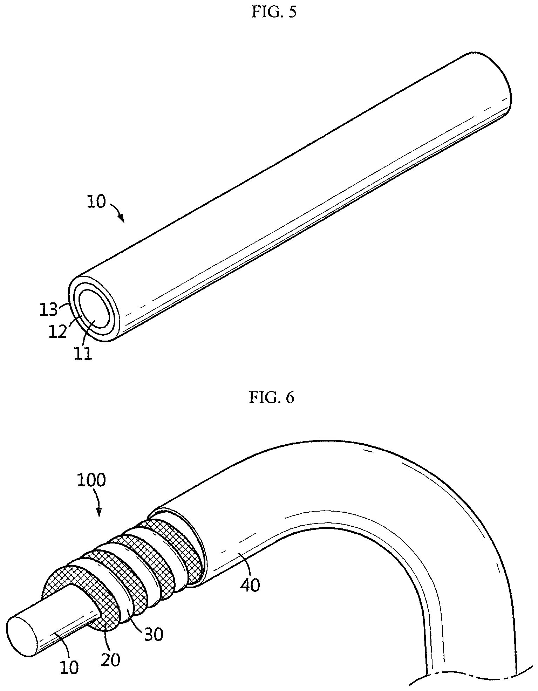

FIG. 5 is a schematic view illustrating the cable-type core portion according to an embodiment of the present disclosure. Referring to FIG. 5, the cable-type core portion 10 according to the present disclosure includes a signal cable 11, which may further include an electromagnetic field interruption-preventing layer 12, 13 surrounding the outer surface thereof in order to prevent electric connection with the positive electrode wire 20 and/or the negative electrode wire 30 and electromagnetic field interruption.

Herein, the electromagnetic field interruption-preventing layer may include an insulating electromagnetic field interruption-preventing layer 12 and a conductive electromagnetic field interruption-preventing layer 13. When such an electromagnetic field interruption-preventing layer is provided, it is possible to prevent interruption caused by generation of electromagnetic field at the electric power supply unit including an electrode assembly, and thus to prevent generation of noises caused by interruption during the transmission of signals of a signal transmitting unit.

The electromagnetic field interruption-preventing layer is not particularly limited in its constitution, and any constitution may be used as long as it can prevent electromagnetic field interruption. For example, the electromagnetic field interruption-preventing layer may have a bilayer structure. Herein, it is preferred that the electromagnetic field interruption-preventing layer that is in direct contact with the signal cable is an insulator and the electromagnetic field interruption-preventing layer formed thereon is a conductor. The insulating electromagnetic field interruption-preventing layer 12 prevents direct contact between the signal cable 11 and the conductive electromagnetic field interruption-preventing layer 13. The conductive electromagnetic field interruption-preventing layer 13 interrupts electromagnetic field generated at the electric power supply unit, thereby preventing interruption in signal transmission.

In principle, any insulating electromagnetic field interruption-preventing layer 12 may be used as long as it does not allow flow of electricity. However, it is preferred to use a polymer material having high flexibility and causing no degradation of the flexibility of the cable type secondary battery. Such polymer materials may include polyethylene terephthalate (PET), polyvinyl chloride (PVC), high-density polyethylene (HDPE) or epoxy resin.

In principle, the conductive electromagnetic field interruption-preventing layer 13 may include a highly conductive metal. However, use of such a metal causes degradation of the flexibility of the secondary battery undesirably. Therefore, in order to prevent degradation of the flexibility, the conductive electromagnetic field interruption-preventing layer according to the present disclosure preferably includes metal paste or carbon paste.

Meanwhile, each of the first porous coating layer 23 and the second porous coating layer 33 may be an electrolyte layer or a separator.

The electrolyte layer which may be an ion channel may include: a gel polymer electrolyte using PEO, PVdF, PVdF-HFP, PMMA, PAN or PVAc; or a solid electrolyte using PEO, polypropylene oxide (PPO), polyethylene imine (PEI), polyethylene sulphide (PES) or polyvinyl acetate (PVAc); or the like. The matrix of solid electrolyte may include a polymer or ceramic glass as a basic backbone. In the case of a conventional polymer electrolyte, ions may be transported very slowly in terms of reaction rate even if the ion conductivity is satisfied. Thus, it is preferred to use a gel polymer electrolyte which facilitates transport of ions as compared to a solid. Since the gel polymer electrolyte does not have excellent mechanical properties, a support may be used in order to supplement this. Such a support may include a porous support or crosslinked polymer. The electrolyte layer according to the present disclosure also functions as a separator, and thus use of any additional separator may be avoided.

According to an embodiment of the present disclosure, the electrolyte layer may further include a lithium salt. The lithium salt improves ion conductivity and reaction rate and non-limiting examples thereof may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborane, lithium lower aliphatic carboxylate, lithium tetraphenylborate, or the like.

Although there is no particular limitation, the separator may be a porous polymer substrate made of a polyolefin polymer selected from the group consisting of an ethylene homopolymer, propylene homopolymer, ethylene-butene copolymer, ethylene-hexene copolymer and ethylene-methacrylate copolymer; a porous polymer substrate made of a polymer selected from the group consisting of polyester, polyacetal, polyamide, polycarbonate, polyimide, polyetherether ketone, polyether sulfone, polyphenylene oxide, polyphenylene sulfide, polyurethane and polyethylene naphthalate; a porous substrate formed of a mixture of inorganic particles and a binder polymer; a separator provided with a porous coating layer formed of a mixture of inorganic particles and a binder polymer on at least one surface of the porous polymer substrate; or a foamed separator obtained by mixing a foaming agent with a liquid phase of polyolefin, coating the resultant mixture on to an electrode wire, and carrying out foaming.

Herein, in the porous coating layer formed of a mixture of inorganic particles and a binder, the inorganic particles are bound to each other by the binder polymer while they are in contact with each other, thereby forming interstitial volumes among the inorganic particles. In addition, the interstitial volumes become vacant spaces to form pores.

In other words, the binder polymer attaches the inorganic particles to each other so that they may retain their binding states. For example, the binder polymer connects and fixes the inorganic particles with each other. In addition, the pores of the porous coating layer are those formed by the interstitial volumes among the inorganic particles which become vacant spaces. The space is defined by the inorganic particles facing each other substantially in a closely packed or densely packed structure of the inorganic particles. It is possible to provide a channel for transferring lithium ions through the pores of the porous coating layer and such a channel is essential for the operation of a battery.

Meanwhile, the cable type secondary battery 100 may be any secondary battery. However, it is preferred that the cable type secondary battery 100 is a freely bendable flexible cable type secondary battery as shown in FIG. 6.

Such a cable type secondary battery is used for supplying electric power to a predetermined electronic system connected to the positive electrode wire and the negative electrode wire.

In addition, the above-mentioned signal cable transmits optical signals, sound signals, electric signals or video signals to a target instrument along the longitudinal direction of the cable type secondary battery.

Therefore, according to the present disclosure, it is possible to carry out an electric power supply function and signal transmission/reception function at the same time through one cable substantially. Such a signal composite cable type secondary battery may be applied advisably to a cable type instrument, such as an earphone, connected to a portable electronic device, including a power storage system, such as uninterruptable power supply (UPS) including a photonic network converged with a secondary battery.

Meanwhile, it should be understood that the embodiments described in the specification and drawings are given by way of illustration only, and the present disclosure is not limited thereto. In addition, various changes and modifications within the scope of the claims will become apparent to those skilled in the art from this detailed description.

## Claims

1. A cable type secondary battery, comprising:
a cable-type core portion;
a positive electrode wire wound helically to surround the outer surface of the cable-type core portion with a predetermined spacing, and including a first porous coating layer formed on the outer surface thereof; and
a negative electrode wire wound helically to surround the outer surface of the cable-type core portion alternately with the wound positive electrode wire to correspond to the predetermined interval, and including a second porous coating layer formed on the outer surface thereof.

2. The cable type secondary battery according to claim 1, wherein the cable-type core portion comprises a signal cable.

3. The cable type secondary battery according to claim 2, wherein the signal cable has a tubular structure, spring-like structure, cylindrical structural or a prismatic structure.

4. The cable type secondary battery according to claim 2, wherein the signal cable is any one selected from the group consisting of a sound signal cable, light signal cable, electric signal cable and a video signal cable, or two or more of them.

5. The cable type secondary battery according to claim 2, wherein the signal cable is an optical fiber cable coated with polyolefin, thermoplastic polyurethane, thermoplastic elastomer or polyacrylate; or a metallic cable of copper, aluminum or nickel.

6. The cable type secondary battery according to claim 2, wherein the signal cable further comprises an electromagnetic field interruption-preventing layer surrounding the outer surface thereof.

7. The cable type secondary battery according to claim 1, wherein each of the first porous coating layer and the second porous coating layer is independently an electrolyte layer or a separator.

8. The cable type secondary battery according to claim 1, which is coated with a protective coating on the outer surface thereof.

9. The cable type secondary battery according to claim 1, which is flexible.

10. The cable type secondary battery according to any one of claims 1 to 9, which is a lithium secondary battery.

## Patentansprüche

1. Sekundärbatterie vom Kabeltyp, umfassend:
einen kabelartigen Kernabschnitt;
einen positiven Elektrodendraht, der spiralförmig gewickelt ist, so dass er die Außenfläche des kabelartigen Kernabschnitts mit einem vorher festgelegten Abstand umgibt, und der eine auf seiner Außenfläche ausgebildete erste poröse Überzugsschicht enthält; und
einen negativen Elektrodendraht, der spiralförmig gewickelt ist, so dass er die Außenfläche des kabelartigen Kernabschnitts abwechselnd mit dem gewickelten positiven Elektrodendraht entsprechend dem vorher festgelegten Abstand umgibt, und der eine auf seiner Außenfläche ausgebildete zweite poröse Überzugsschicht enthält.

2. Sekundärbatterie vom Kabeltyp gemäß Anspruch 1, wobei der kabelartige Kernabschnitt ein Signalkabel umfasst.

3. Sekundärbatterie vom Kabeltyp gemäß Anspruch 2, wobei das Signalkabel eine röhrenförmige Struktur, eine federartige Struktur, eine zylindrische Struktur oder eine prismatische Struktur aufweist.

4. Sekundärbatterie vom Kabeltyp gemäß Anspruch 2, wobei das Signalkabel eines ist, ausgewählt aus der Gruppe, bestehend aus einem Tonsignalkabel, Lichtsignalkabel, elektrischem Signalkabel und einem Videosignalkabel oder zwei oder mehreren davon.

5. Sekundärbatterie vom Kabeltyp gemäß Anspruch 2, wobei das Signalkabel ein Glasfaserkabel, das mit Polyolefin, thermoplastischem Polyurethan, thermoplastischem Elastomer oder Polyacrylat beschichtet ist; oder ein Metallkabel aus Kupfer, Aluminium oder Nickel ist.

6. Sekundärbatterie vom Kabeltyp gemäß Anspruch 2, wobei das Signalkabel ferner eine seine Außenfläche umgebende Schicht zur Verhinderung einer Unterbrechung des elektromagnetischen Feldes umfasst.

7. Sekundärbatterie vom Kabeltyp gemäß Anspruch 1, wobei die erste poröse Überzugsschicht und die zweite poröse Überzugsschicht jeweils unabhängig voneinander eine Elektrolytschicht oder ein Separator ist.

8. Sekundärbatterie vom Kabeltyp gemäß Anspruch 1, die auf ihrer Außenfläche mit einer Schutzbeschichtung beschichtet ist.

9. Sekundärbatterie vom Kabeltyp gemäß Anspruch 1, die flexibel ist.

10. Sekundärbatterie vom Kabeltyp gemäß einem der Ansprüche 1 bis 9, die eine Lithiumsekundärbatterie ist.

## Revendications

1. Batterie rechargeable de type câble, comprenant :
une portion formant âme de type câble ;
un fil d'électrode positive enroulée de façon hélicoïdale pour entourer la surface extérieure de la portion formant âme de type câble avec un espacement prédéterminé, et incluant une première couche de revêtement poreux formée sur la surface extérieure de celle-ci ; et
un fil d'électrode négative enroulé de façon hélicoïdale pour entourer la surface extérieure de la portion formant âme de type câble en alternance avec le fil d'électrode positive enroulé pour correspondre à l'intervalle prédéterminé, et incluant une seconde couche de revêtement poreux formée sur la surface extérieure de celle-ci.

2. Batterie rechargeable de type câble selon la revendication 1, dans laquelle la portion formant âme de type câble comprend un câble de signal.

3. Batterie rechargeable de type câble selon la revendication 2, dans laquelle le câble de signal présente une structure tubulaire, une structure semblable à un ressort, une structure cylindrique ou une structure prismatique.

4. Batterie rechargeable de type câble selon la revendication 2, dans laquelle le câble de signal est l'un quelconque sélectionné dans le groupe constitué par un câble de signal de son, un câble de signal de lumière, un câble de signal électrique et un câble de signal vidéo, ou deux ou plus d'entre eux.

5. Batterie rechargeable de type câble selon la revendication 2, dans laquelle le câble de signal est un câble à fibres optiques revêtu de polyoléfine, de polyuréthane thermoplastique, d'élastomère thermoplastique ou de polyacrylate ; ou un câble métallique de cuivre, d'aluminium ou de nickel.

6. Batterie rechargeable de type câble selon la revendication 2, dans laquelle le câble de signal comprend en outre une couche de prévention d'interruption de champ électromagnétique entourant la surface extérieure de celle-ci.

7. Batterie rechargeable de type câble selon la revendication 1, dans laquelle chacune de la première couche de revêtement poreux et de la seconde couche de revêtement poreux est indépendamment une couche d'électrolyte ou un séparateur.

8. Batterie rechargeable de type câble selon la revendication 1, qui est revêtue d'un revêtement protecteur sur la surface extérieure de celle-ci.

9. Batterie rechargeable de type câble selon la revendication 1, qui est souple.

10. Batterie rechargeable de type câble selon l'une quelconque des revendications 1 à 9, qui est une batterie rechargeable au lithium.
